# DEMANDE DE BREVET EUROPEEN

(11) **EP 1 093 306 A1**
(43) Date de publication de la demande: **18.04.2001**
(21) Numéro de dépôt: 00402535.9
(22) Date de dépôt: 13.09.2000
(51) Int. Cl.: H04N 7/10, H04N 17/00

(54) **Procédé et dispositif d'analyse d'une liaison entre un décodeur d'un téléviseur et un serveur**

(30) Priorité: 16.09.1999 FR 9911568
(71) Demandeur: SAGEM S.A., 75783 Paris Cedex 16 (FR)
(72) Inventeur: Demarchi, Stephane, 75016 Paris (FR); Laroche, Nicolas, 75003 Paris (FR)
(74) Mandataire: Schmit, Christian Norbert Marie

(57) **Abrégé**

Pour permettre de diagnostiquer un dysfonctionnement dans une liaison (1) de communication entre un décodeur (2) et un serveur (4) d'informations, on réalise un dispositif (9) d'analyse comportant un premier récepteur (10) relié à une voie (7) montante de cette liaison et un deuxième récepteur (11) relié à une voie (8) descendante de cette liaison. Ce dispositif d'analyse a pour fonction de mesurer les caractéristiques physiques de la liaison, de contrôler un bon fonctionnement du protocole d'échange d'informations entre le décodeur et le serveur, de caractériser le fonctionnement temps réel du décodeur et de l'interface, d'évaluer la qualité du trafic des informations entre le décodeur et l'interface et ce de manière centralisée. Un seul appareil permet de caractériser la liaison à contrôler.

## Description

La présente invention a pour objet un procédé d'analyse d'une liaison entre un décodeur d'un téléviseur et un serveur. Elle a aussi pour objet un dispositif de mise en oeuvre de ce procédé. L'invention s'applique au domaine des vidéocommunications, et plus précisément elle concerne les systèmes dans lequel un téléviseur est relié à un serveur vidéo par l'intermédiaire notamment d'un réseau informatique et d'un décodeur permettant un accès au réseau. L'invention s'applique plus particulièrement au vidéocommunications réalisées en respectant la norme DAVIC (Digital Audio Visual Council en anglais pour conseil audio visuel numérique), et plus particulièrement la partie concernant les protocoles de la couche basse ainsi que l'interface physique, et la norme DVB (Digital Video Broadcasting en anglais pour diffusion vidéo numérique en français). Généralement, une partie de la liaison entre le décodeur et le serveur est une liaison filaire par câble coaxial de type HFC (Hybrid Fibre Coaxial en anglais pour Fibre Coaxiale Hybride en français). Le but de l'invention est d'améliorer des conditions de réalisation de la maintenance de cette liaison de communication.

Tout système informatique peut être modélisé sous la forme d'un modèle en couches dont un modèle de référence est le modèle OSI. Dans l'invention, on tient compte principalement de la couche physique et de la couche liaison. Une maintenance de cette liaison peut-être séparée en deux phases complémentaires, chaque phase étant associée à une couche. Une première phase correspond à une analyse de la couche physique de la liaison de communication. Une analyse de la couche physique permet de déterminer une qualité de la transmission en terme de taux d'erreurs binaire, de gigue de phase ou autre. Cette analyse permet aussi de déterminer une puissance des signaux transmis sur cette liaison, des fréquences associées à ces signaux ainsi que des informations de débit utilisé. Une deuxième phase consiste en l'analyse de la communication au regard du protocole de communication utilisé et défini par la couche liaison qui à en charge de gérer les différents accès au support de communication. Un protocole généralement utilisé avec la couche liaison est le protocole MAC (Medium Access Control en anglais pour Contrôle d'Accès au Support en français). Une analyse d'un dialogue entre le décodeur et le serveur avec le protocole MAC permet notamment de vérifier une cohérence de ce dialogue. Plus précisément, il s'agit d'un dialogue entre le décodeur et une interface avec le serveur. Cette interface a pour principale fonction de fournir au décodeur un accès au réseau informatique. De plus, une liaison entre le réseau et l'interface est, par exemple, une liaison ethemet.

La liaison de communication entre le décodeur et l'interface comporte deux voies de communication. Une première voie de communication, ou voie descendante, est réalisée de l'interface au décodeur. Une deuxième voie de communication, ou voie montante, est réalisée du décodeur vers l'interface.

Actuellement, pour procéder à la maintenance de cette liaison, on doit se placer d'une part du côté du dispositif interface et d'autre part du côté du décodeur. Ainsi, on contrôle que d'une part les informations reçues ou émises par le dispositif interface sont correctes et que d'autre part les informations émises ou reçues par le décodeur sont aussi correctes. Suite à ce contrôle, on compare les différents résultats afin d'en déduire un état de la liaison de communication.

Cette procédure présente des problèmes. En effet, un premier problème apparaît dans la méthode employée pour analyser un comportement de la liaison de communication. Une telle méthode conduit à de longues phases de dialogue entre un agent de maintenance placé du côté du dispositif interfaces et un agent de maintenance placé du côté du décodeur. De plus, les deux agents doivent établir, avant une intervention ou pendant cette intervention, un plan d'action sous la forme d'un ensemble d'étapes à réaliser. Chaque agent de maintenance doit ensuite interpréter des informations que l'autre agent lui aura transmis en fonction des informations qu'il a déjà à sa disposition. Une telle réalisation est longue et fastidieuse. De plus, les causes de certains dysfonctionnements, tels que de la gigue de phase ou une atténuation, du système sont difficiles à déterminer. Ainsi on peut détecter qu'il y a une panne mais on ne saura pas laquelle. Actuellement il n'existe pas d'outil permettant aux opérateurs de qualifier le bon fonctionnement de leur réseau. De même, il n'existe pas d'outil leur permettant de diagnostiquer des problèmes éventuels.

La présente invention a pour objet de remédier à ces problèmes en proposant un dispositif d'analyse centralisé de la liaison de communication. Avec ce dispositif d'analyse, on réalise une analyse de la voie montante et de la voie descendante à partir d'un même emplacement le long de la liaison. Ainsi, un agent de maintenance peut réaliser seul une analyse de la voie montante et de la voie descendante en contrôlant toutes les opérations nécessaires. Ce dispositif d'analyse permet de mesurer les caractéristiques associées à la couche physique et de recueillir les informations échangées entre le décodeur et l'interface afin de vérifier le bon fonctionnement de la couche liaison. Le dispositif d'analyse examine en outre la cohérence de toutes ces données recueillies et mesurées vis à vis des normes selon lesquelles le système fonctionne. Parmi ces normes, on peut citer notamment la norme ETSI 300 800 qui définit les échanges entre le décodeur et l'interface.

La présente invention a donc pour objet un dispositif d'analyse d'une liaison de communication entre un décodeur d'un téléviseur et une interface avec un serveur d'informations, cette liaison comportant une voie montante de communication du décodeur vers l'interface et une voie descendante de communication de l'interface vers le décodeur, caractérisé en ce qu'il comporte un premier récepteur d'un signal émis par le dispositif interface à travers la voie descendante et un deuxième récepteur d'un signal émis par le décodeur à travers la voie montante, le premier récepteur et le deuxième récepteur étant à relier, pour une analyse, à la voie montante et à la voie descendante respectivement.

Elle a aussi pour objet un procédé d'analyse d'une liaison de communication, entre un décodeur d'un téléviseur et une interface avec un serveur d'informations, dans laquelle :
- on communique du dispositif interface vers le décodeur en utilisant une voie montante,
- on communique du décodeur vers le dispositif interface en utilisant une voie descendante,
caractérisé en ce que :
- on réalise un dispositif d'analyse, ce dispositif d'analyse comportant un premier récepteur d'un message transmis à travers la voie montante et un deuxième récepteur d'un message transmis à travers la voie descendante,
- on relie le premier récepteur à la voie montante,
- on relie le deuxième récepteur à la voie descendante,
- on mémorise, dans une mémoire de sauvegarde du dispositif d'analyse, un premier message émis par l'interface via la voie descendante ou par le décodeur via la voie montante et un deuxième message transmis par le décodeur via la voie montante ou par l'interface via la voie descendante respectivement, le deuxième message étant un message émis en réponse au premier message,
- on produit un message de mesure à partir d'une mesure relative à la couche physique de la liaison de communication,
- on produit une information de maintenance, permettant de caractériser une éventuelle panne, à partir du premier message, du deuxième message et du message de mesure.

La présente invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un diagramme fonctionnel du dispositif d'analyse selon l'invention reliée à une liaison de communication.
- Figure 2 : une représentation, sous une forme d'un algorithme, d'un fonctionnement du procédé de l'invention.

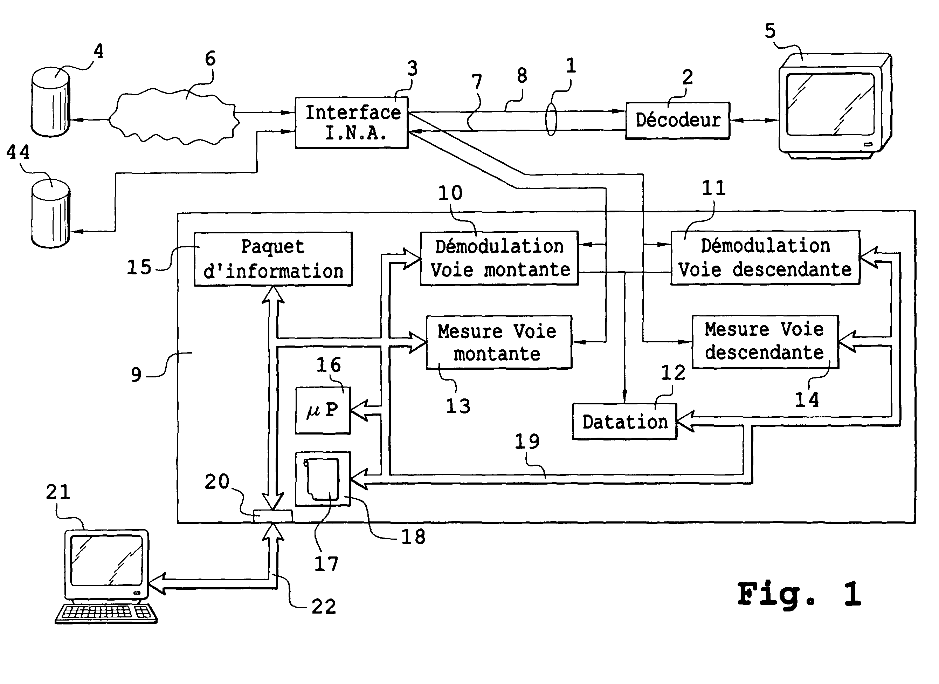

La figure 1 montre une liaison 1 de communication entre un décodeur 2 de télévision et une interface 3 avec un serveur 4 d'informations par exemple. En fait, l'interface 3 peut assurer une interface entre le téléviseur 1 et plusieurs serveurs. Le décodeur 2 est relié à un téléviseur 5. Le décodeur 2 a pour fonction de transmettre au téléviseur 5 des informations à visualiser produits par le serveur 4 et ou par un autre serveur 44. Dans cet exemple, le serveur 4 est relié à l'interface 3 par l'intermédiaire d'un réseau 6 de transmission de type Ethernet. Cependant, il pourrait très bien s'agir d'un réseau 6 de type Intemet ou un réseau de vidéocommunication quelconque. Le serveur 44 est relié par une liaison filaire directement à l'interface 3. Pour permettre les communications entre l'interface 3 et le décodeur 2, la liaison 1 comporte une voie 7 montante de communication du décodeur 2 vers l'interface 3 et une voie 8 descendante de communication de l'interface 3 vers le décodeur 2.

Physiquement, la liaison 1 est généralement un câble de type HFC, c'est-à-dire un câble coaxial. La voie 7 et la voie 8 sont des canaux de transmission, chaque canal étant représenté par une porteuse différente. Ainsi, la liaison 1 peut être décomposée en plusieurs couches à caractériser dont principalement la couche physique et la couche liaison. Une caractérisation de la couche physique permet d'estimer la qualité de la transmission, la puissance des signaux transitant sur la liaison 1, des fréquences et débits utilisés pour ces signaux transmis. La caractérisation de la couche liaison permet de vérifier la conformité de la communication en regard du protocole MAC de communication utilisé et d'analyser les divergences éventuelles. Ce protocole MAC peut être lui-même décomposé en deux parties que l'on nommera par la suite partie basse et partie haute. La partie basse du protocole MAC a en charge d'assurer l'accès des signaux à émettre à la couche physique. La partie haute du protocole MAC a en charge d'assurer le dialogue entre le décodeur 2 et l'interface 3 vis-à-vis de la norme DAVIC ou DVB.

Dans l'invention, on réalise un dispositif 9 d'analyse de la liaison 1. Selon une caractéristique essentielle de l'invention le dispositif 9 comporte un premier récepteur 10 et un deuxième récepteur 11. Le premier récepteur 10 est à relier à la voie 7 et le deuxième récepteur 11 est à relier à la voie 8. Une transmission à travers la voie 8 est généralement réalisée en utilisant un procédé de modulation de type QPSK (Quadrature Phase Shift Keying en anglais pour modulation par déplacement de phase en quadrature en français). Une transmission à travers la voie 7 est généralement réalisée en utilisant un procédé de modulation de type QPSK en mode rafale ( ou burst en anglais). En conséquence, le récepteur 10 et le récepteur 11 comportent respectivement un démodulateur QPSK en mode burst et un démodulateur QPSK.

Lors d'une phase d'analyse, le récepteur 10 et le récepteur 11 sont reliés respectivement à la voie 7 et à la voie 8. Dans une réalisation préférée de l'invention, le dispositif 9 est relié à la liaison 1 en parallèle avec le décodeur 2 ou l'interface 3. On branchera de préférence le dispositif 9 en parallèle avec l'interface 3. Cette solution permet, au cas où plusieurs liaisons de communication sont rassemblées dans un même endroit, d'avoir toutes les interfaces associées à ces liaisons de communication à portée de mains. En générale, les différentes interfaces d'une même zone géographique sont physiquement regroupées dans un local aménagé. Ainsi, dans cette réalisation préférée, l'interface 3 comporte un connecteur d'accès (non représenté) à la liaison 1, ce connecteur étant relié d'une part en permanence à la liaison 1 et d'autre part temporairement au dispositif 9. En effet, le dispositif 9 est relié à l'interface 3, et donc à la liaison 1, pendant seulement une durée d'analyse de cette liaison 1. Ce connecteur d'accès peut être une simple pince, ou un connecteur plus évolué, raccordé au câble de la liaison 1.

Dans un exemple préféré, le dispositif 9 comporte un moyen 12 de mesure du décalage temporel entre un début d'une trame associé à la voie 7 ou à la voie 8 et un début d'une trame associé à la voie 8 ou à la voie 7 respectivement. Dans un exemple, le moyen 12 est un compteur pouvant être utilisé comme une horloge. En outre, le moyen 12 permet de dater chaque trame reçue et associée à la voie 7 et ou à la voie 8.

Comme précisé plus haut, le dispositif 9 doit permettre une caractérisation de la couche physique de la liaison 1. En conséquence, le dispositif 9 comporte un moyen 13 de mesure associé à la voie 7 et un moyen de mesure 14 associé à la voie 8. Le moyen 13 et/ou le moyen 14 permettent notamment de produire un message de mesure. Ce message de mesure comporte notamment une information relative à une puissance d'un signal émis à travers la liaison 1, une fréquence associée à ce signal émis ainsi qu'un débit associé. La production de ces informations peut être réalisée de plusieurs façons possibles. Les différents éléments pouvant être utilisés par le moyen 13 et/ou le moyen 14 sont dépendants de la précision des mesures que l'on souhaite effectuer ainsi que du choix de la technologie à utiliser tel que numérique ou analogique principalement.

Ces informations peuvent être mémorisées afin d'être étudiées en vue de permettre la caractérisation de cette liaison 1. Pour cela, le dispositif 9 comporte une mémoire 15 de sauvegarde. Le dispositif 9 comporte en outre un microprocesseur 16 de gestion des différents éléments du dispositif 9, un programme 17 de commande du microprocesseur 16 dans une mémoire de programme 18. Un bus 19 de commande, d'adresse et de données relie les différents éléments du dispositif 9.

De plus, le dispositif 9 de l'invention doit permettre de caractériser l'échange d'information entre le décodeur 2 et l'interface 3. Pour cela, on mémorise dans la mémoire 15 un premier message émis par l'interface 3 via la voie 8 ou par le décodeur 2 via la voie 7 et un deuxième message transmis par le décodeur 2 via la voie 7 ou par l'interface 3 via la voie 8 respectivement. Le deuxième message est un message émis en réponse au premier message. Ainsi, la totalité des échanges entre le décodeur 2 et l'interface 3 est mémorisée sur une période de temps donnée. Ces échanges sont traités et analysés afin de produire une information de maintenance. En fait, selon la capacité de la mémoire 15, la totalité ou une partie du dialogue entre le décodeur 2 et l'interface 3 est mémorisée. De plus, on mémorise dans la mémoire 15 une information relative à la date de réception de chaque message dans le dispositif 9. Cette information de maintenance comporte en outre le message de mesure ainsi que les informations temporelles de datation. L'information de maintenance permet d'identifier une éventuelle panne au niveau de la couche liaison et de caractériser le fonctionnement temporel du décodeur 2 et de l'interface 3.

Dans une variante préférée de l'invention le dispositif 9 comporte un connecteur 20 de liaison avec un ordinateur 21. L'ordinateur 21 est relié au connecteur 20 par l'intermédiaire d'une liaison 22 de type série par exemple. On transmet ainsi à l'ordinateur 21 un paquet d'information, voire plusieurs, comportant l'information de maintenance. Dans une autre variante, on pourrait envisager de placer la mémoire 15 directement dans l'ordinateur 21. De plus, le connecteur 20 peut très bien être un connecteur d'extension à connecter sur un bus d'extension de l'ordinateur 21. Ainsi, le dispositif 9 se présenterait sous la forme d'une carte d'extension à insérer dans l'ordinateur 21.

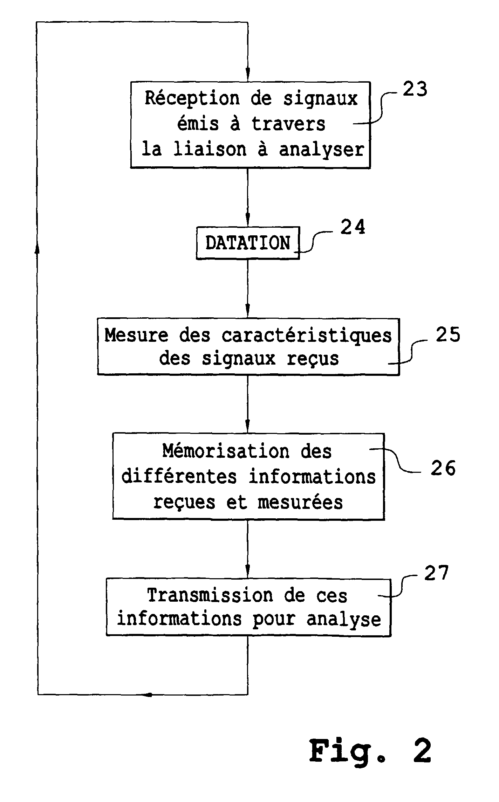

La figure 2 montre une représentation, sous une forme d'un algorithme, d'un fonctionnement du procédé de l'invention. Ainsi, pendant une étape 23, le dispositif 9 reçoit des signaux émis à travers la liaison 1. On utilise alors le récepteur 10 et le récepteur 11 reliés à la voie 7 et à la voie 8 respectivement de la liaison 1. Suite à cette étape 23, on réalise une datation, pendant une étape 24, des signaux reçus afin de pouvoir déterminer notamment un offset entre un signal émis par le décodeur 2 ou l'interface 3 et un signal émis par l'interface 3 ou le décodeur 2 en réponse respectivement.

Lors d'une étape 25, le dispositif 9 mesure, à l'aide du moyen 13 et du moyen 14, des caractéristiques des signaux reçus à travers la voie 7 et la voie 8 respectivement. Les différentes informations ainsi collectées par le dispositif 9 sont mémorisées, pendant une étape 26, dans la mémoire 15 de sauvegarde. Ces informations ainsi mémorisées dans la mémoire 15 sont accessibles à un utilisateur du dispositif 9. Ainsi, lors d'une étape 27, les informations collectées et/ou mémorisées dans la mémoire 15 sont transmises pour analyse. Dans une réalisation préférée de l'invention, ces informations sont transmises à l'ordinateur 21 par l'intermédiaire de la liaison 22, le dispositif 9 comportant un connecteur 20 permettant d'être relié à la liaison 22.

## Revendications

1. Dispositif (9) d'analyse d'une liaison (1 ) de communication entre un décodeur (2) d'un téléviseur (5) et une interface (3) avec un serveur (4) d'informations, cette liaison comportant une voie (7) montante de communication du décodeur vers le dispositif interface et une voie (8) descendante de communication de l'interface vers le décodeur, caractérisé en ce qu'il comporte un premier récepteur (10) d'un signal émis par l'interface à travers la voie descendante et un deuxième récepteur (11 ) d'un signal émis par le décodeur à travers la voie montante, le premier récepteur et le deuxième récepteur étant à relier, pour une analyse, à la voie montante et à la voie descendante respectivement.

2. Dispositif selon la revendication 1 caractérisé en ce que l'interface comporte un connecteur d'accès à la liaison, ce connecteur étant relié d'une part en permanence à la liaison et d'autre part temporairement, pendant une durée d'analyse, au dispositif d'analyse.

3. Dispositif selon l'une des revendications 1 ou 2 caractérisé en ce qu'il comporte un moyen (12) de datation d'une trame reçue et associée à la voie montante et ou à la voie descendante.

4. Dispositif selon l'une des revendications 1 à 3 caractérisé en ce qu'il comporte un moyen (12) de mesure d'un décalage temporelle entre un début d'une trame associée à la voie montante ou descendante et un début d'une trame associée à la voie descendante ou montante respectivement.

5. Dispositif selon l'une des revendications 1 à 4 caractérisé en ce qu'il comporte un connecteur (20) de liaison avec un ordinateur (21).

6. Procédé d'analyse d'une liaison (1) de communication, entre un décodeur (2) d'un téléviseur et une interface avec un serveur (4) d'informations, dans laquelle :
- on communique du dispositif interface vers le décodeur en utilisant une voie (7) montante,
- on communique du décodeur vers le dispositif interface en utilisant une voie (8) descendante,
caractérisé en ce que :
- on réalise un dispositif (9) d'analyse, ce dispositif d'analyse comportant un premier récepteur (10) d'un message transmis à travers la voie montante et un deuxième récepteur (11) d'un message transmis à travers la voie descendante,
- on relie le premier récepteur à la voie montante,
- on relie le deuxième récepteur à la voie descendante,
- on mémorise, dans une mémoire (15) de sauvegarde du dispositif d'analyse, un premier message émis par l'interface via la voie descendante ou par le décodeur via la voie montante et un deuxième message transmis par le décodeur via la voie montante ou par l'interface via la voie descendante respectivement, le deuxième message étant un message émis en réponse au premier message,
- on produit un message de mesure à partir d'une mesure relative à la couche physique de la liaison de communication,
- on produit une information de maintenance, permettant de caractériser une éventuelle panne, à partir du premier message, du deuxième message et du message de mesure.

7. Procédé selon la revendication 6 caractérisé en ce que :
- on relie le dispositif d'analyse à un ordinateur (21),
- on transmet à l'ordinateur un paquet d'informations comportant l'information de maintenance,
- on produit l'information de maintenance dans l'ordinateur.

8. Procédé selon l'une des revendications 6 ou 7 caractérisé en ce que :
- on mémorise une information relative à une date de réception d'un message dans le dispositif d'analyse.
